Europäisches Patentamt

European Patent Office

Office européen des brevets

(11) Numéro de publication: **0 406 174 B1**

# FASCICULE DE BREVET EUROPEEN

(45) Date de publication du fascicule du brevet: **30.08.95** (51) Int. Cl.6: **G01K 7/00**

(21) Numéro de dépôt: **90810475.5**

(22) Date de dépôt: **25.06.90**

(54) **Capteur de température intégré.**

(30) Priorité: **28.06.89 CH 2392/89**

(43) Date de publication de la demande:
**02.01.91 Bulletin 91/01**

(45) Mention de la délivrance du brevet:
**30.08.95 Bulletin 95/35**

(84) Etats contractants désignés:
**CH DE FR GB IT LI NL**

(56) Documents cités:
**US-A- 4 165 642**
**US-A- 4 636 092**

**IEEE JOURNAL OF SOLID-STATE CIRCUITS,
vol. 23, no. 6, décembre 1988, pages 1405-1410; G. MEIJER: "An accurate biomedical temperature transducer with on-chip microcomputer interfacing"**

(73) Titulaire: **CENTRE SUISSE D'ELECTRONIOUE
ET DE MICROTECHNIOUE S.A.
Maladière 71
CH-2007 Neuchâtel (CH)**

(72) Inventeur: **Oguey, Henri
Vignes 5
CH-2035 Corcelles (CH)**
Inventeur: **Krummenacher, Pierre
En Poéty
CH-1423 Villars-Burquin (CH)**

(74) Mandataire: **Brulliard, Joel
c/o CENTRE SUISSE D'ELECTRONIOUE
ET DE MICROTECHNIOUE S.A.
Maladière 71
CH-2007 Neuchâtel (CH)**

## Description

La présente invention se rapporte aux dispositifs de mesure de la température et concerne plus particulièrement un capteur de température capable d'être intégré en technologie CMOS.

On connaît un grand nombre d'exemples de dispositifs intégrés de mesure de la température qui utilisent des technologies de type bipolaire. Le ou les éléments le plus souvent utilisés dans ces technologies sont les transistors bipolaires dont le courant de collecteur est une fonction exponentielle du rapport de la tension base-émetteur à une tension équivalente proportionnelle à la température absolue. Si ces dispositifs permettent de satisfaire aux principaux critères des bons capteurs tels que: la bonne sensibilité à la température, la variation linéaire de la tension avec la température, la reproductibilité des caractéristiques d'une intégration à l'autre, la stabilité dans le temps, etc., l'utilisation des technologies bipolaires ne favorise cependant pas l'introduction de fonctions de traitement du signal, qui font application de techniques plus numériques qu'analogiques, et pour lesquelles les technologies de type MOS sont plus adaptées. On conçoit dès lors, que l'on se tourne vers ces dernières lorsque l'on cherche à augmenter la sophistication (ou le degré d'intelligence) des circuits de mesure de température. On a donc cherché à utiliser les éléments disponibles des technologies MOS tels que: les transistors MOS travaillant en faible inversion ou les structures à comportement bipolaire, encore appelées "transistors latéraux au substrat". D'autres éléments, comme les résistances diffusées de caisson, les diodes ou les résistances en polysilicium, ont également été proposés comme éléments capteurs de la température, mais aucun ne satisfait pleinement à l'ensemble des critères reconnus.

Deux capteurs de température intégrés ont déjà été décrits dans le brevet américain US-A-4636092 et dans l'article "An accurate biomedical temperature transducer with on-chip microcomputer interfacing" de G. Meijer, paru dans la revue IEEE Journal of Solid-State Circuits, vol. 23, No 6, Décembre 1988, pages 1405-1410. Ces deux capteurs utilisent des technologies bipolaires qui ne permettent pas de satisfaire à l'ensemble des critères mentionnés précédemment et, également, d'atteindre un très bas niveau de consommation.

E. Vittoz a montré, dans un article intitulé "MOS Transistors Operated in the Lateral Bipolar Mode and Their Applications in CMOS Technology" et publié dans IEEE Journal of Solid-State Circuits, Vol. SC-18, No 3, juin 1983, la possibilité de réaliser des transistors bipolaires latéraux au moyen de structures MOS qui ne présentent pas l'inconvénient des transistors latéraux au substrat mentionnés ci-dessus d'avoir nécessairement leur collecteur relié au substrat. Les caractéristiques de ces transistors bipolaires latéraux, que l'on appellera pour plus de commodité "transistors bipolaires compatibles", sont très reproductibles et le bruit qu'ils engendrent est faible. Par contre, à l'inverse des transistors dans les technologies bipolaires, il y a lieu de tenir compte du fait que le gain en courant des transistors bipolaires compatibles est faible et mal contrôlé et de l'existence d'un courant de substrat.

Un objet de la présente invention est un circuit de mesure de la température capable d'être réalisé en technologie CMOS.

Un autre objet de l'invention est un circuit de mesure de la température délivrant une information numérique de la température.

Un autre objet de l'invention est un circuit de mesure de la température compatible avec des faibles tensions d'alimentation.

Les caractéristiques de l'invention sont contenues dans les revendications.

D'autres objets, caractéristiques et avantages de la présente invention apparaîtront plus clairement à la lecture de la description suivante d'exemples de réalisation particuliers, ladite description étant faite à titre d'exemple non limitatif et en relation avec les dessins dans lesquels:

- la figure 1 est un schéma-bloc du dispositif de l'invention;
- la figure 2 illustre le principe d'un schéma de circuit de génération de tension de référence;
- la figure 3 montre un schéma-bloc d'un circuit complet de mesure de la température;
- la figure 4 montre le schéma de principe du générateur de courant de référence;
- la figure 5 montre le schéma de principe du générateur de courant $I_{VBE}$;
- la figure 6 montre le schéma complet des générateurs de courant $I_{VBE}$ et de référence;
- la figure 7 montre le schéma de principe de l'oscillateur contrôlé en tension;
- la figure 8 montre le schéma-bloc du convertisseur double rampe; et
- la figure 9 est un schéma explicatif de la conversion double rampe.

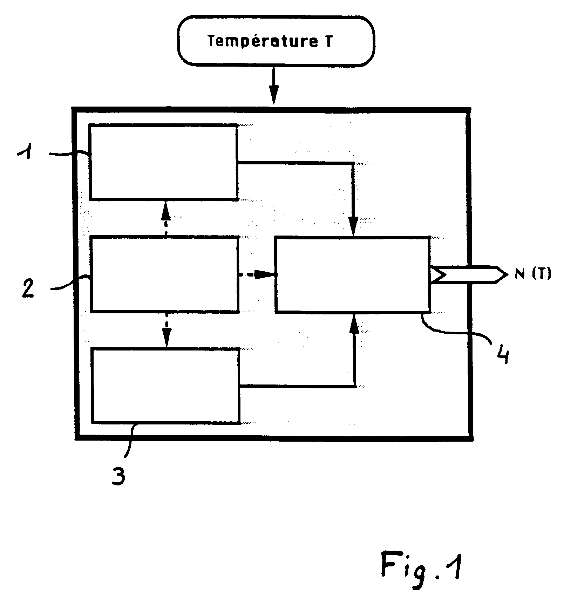

La figure 1 permet de montrer les blocs principaux composant le circuit de l'invention. Il se compose d'un capteur de température 1 sensible à la température environnante, d'un bloc de référence 3 délivrant un signal de référence, d'un convertisseur A/D 4 fournissant une grandeur numérique et d'un bloc d'étalonnage 2 délivrant des signaux de calibration aux différents blocs du circuit.

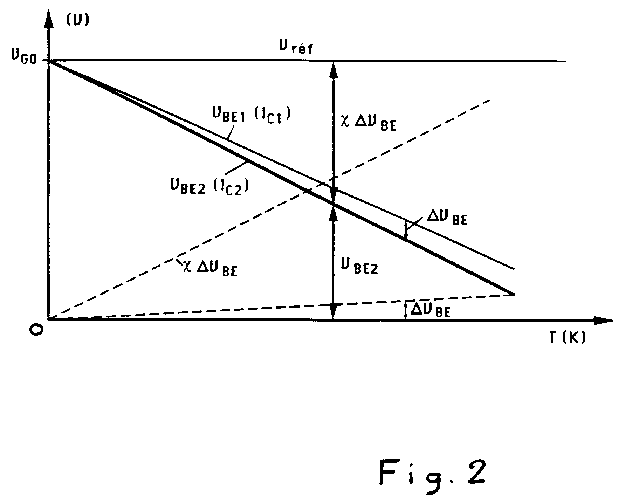

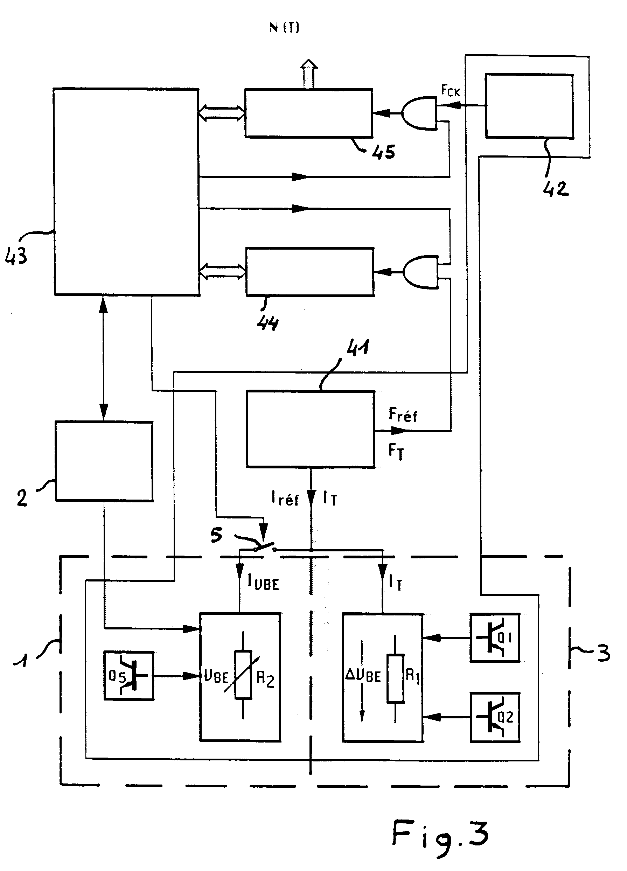

La figure 2 permet d'exposer le principe du capteur de température et du générateur de tension de référence. On se référera également au schéma-bloc de la figure 3. Les transistors Q1 à Q5 de la figure 3 représentent des transistors bipolaires compatibles tels que décrits dans l'article susmentionné de E. Vittoz. Les courbes $V_{BE1}$ et $V_{BE2}$ montrent l'évolution des tensions base-émetteur des transistors Q1 et Q2 en fonction de la température absolue T(K). Ces tensions décroissent en fonction de la température à partir d'un point $V_{G0}$ qui représente la tension de la bande interdite pour le silicium, extrapolée à O K, soit environ 1,25 volt. Une solution connue pour générer une tension de référence consiste à additionner une tension $V_{BE}(T)$, décroissant linéairement avec la température, à une tension $k \cdot \Delta V_{BE}$ (où k est un coefficient de proportionnalité), qui est strictement proportionnelle à la température absolue. Cette tension $\Delta V_{BE}$ est convertie par la résistance R1 en un courant de différence $I_T$. Au transistor Q5 est associée une tension $V_{BE}$ qui est convertie par la résistance R2 en un courant $I_{VBE}$ qui décroît avec la température et qui est tel que la somme $I_T + I_{VBE}$ = $I_{réf}$ constitue un courant de référence.

Le rapport des courants $I_T/I_{réf}$ est une grandeur qui est proportionnelle à la température absolue, pour autant que les résistances R1 et R2 aient le même coefficient de température; ce qui est vérifié lorsque ces résistances sont disposées proches l'une de l'autre.

Les courants $I_T$ et $I_{réf}$ sont, à travers un dispositif interrupteur 5, appliqués à l'oscillateur commandé en courant 41 qui délivrent des signaux aux fréquences $F_{réf}$ et $F_T$ proportionnelles aux courants $I_{réf}$ et $I_T$, respectivement. Le rapport de ces deux fréquences est converti en un nombre N(T) à l'aide de deux compteurs 44 et 45, qui travaillent selon le principe de la double rampe, ainsi qu'on le verra plus loin. Le séquenceur 43 assure la gestion de tous les signaux de contrôle nécessaires. L'oscillateur local 42 délivre un signal d'horloge $F_{CK}$ au compteur 45. La figure 3 montre encore un circuit d'étalonnage 2 dont le rôle est le suivant. Il permet l'étalonnage de la fréquence $F_{réf}$ de telle sorte que le rapport $F_T/F_{réf}$ soit proportionnel à la température absolue; cela est réalisé par un ajustement de la pondération entre $I_{VBE}$ et $I_T$. Il réalise aussi l'étalonnage du facteur d'échelle du signal, c'est-à-dire qu'il définit en terme de température la pleine échelle du convertisseur. Enfin, il permet un ajustement fin du zéro de l'échelle de mesure pour compenser les défauts de linéarité du rapport $F_T/F_{réf}$.

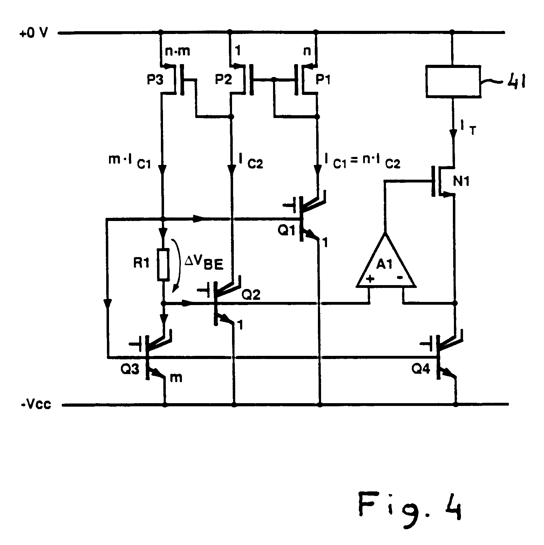

La figure 4 montre le schéma de principe du générateur de courant de différence $I_T$. Les transistors Q1 et Q2 engendrent aux bornes de la résistance R1 une tension $\Delta V_{BE}$ qui est proportionnelle à la température absolue. Les tensions de collecteur de Q1 et Q2 sont maintenues égales grâce à l'agencement du transistor pMOS P3, du transistor bipolaire compatible Q3 et du miroir de courant formé par les transistors pMOS P1 et P2. Le miroir de courant est tel que les courants de collecteur $I_{c1}$ et $I_{c2}$ de Q1 et Q2, respectivement, sont dans un rapport n, soit $I_{c1}$ = $n \cdot I_{c2}$. Le transistor P3 est tel que son courant de drain est égal à $m \cdot I_{c1}$. Les densités de courant des transistors P1 et P3 sont identiques. Le courant de différence $I_T$ est fourni par le transistor bipolaire compatible Q4, lequel forme un miroir de courant avec le transistor Q3. Les tensions de collecteur de Q3 et Q4 sont maintenues égales grâce au montage cascode du transistor nMOS N1 dont la tension de source est asservie au potentiel du collecteur de Q3 par l'amplificateur opérationnel à transconductance A1. La réalisation de cet amplificateur peut être faite à l'aide d'une paire différentielle de transistors pMOS. Le courant $I_T$ peut directement alimenter une charge de sortie telle que l'oscillateur commandé en courant 41, connecté entre le drain de N1 et la borne positive de l'alimentation, car ce courant est indépendant de la tension de drain de N1, pourvu qu'elle soit supérieure à sa tension de source.

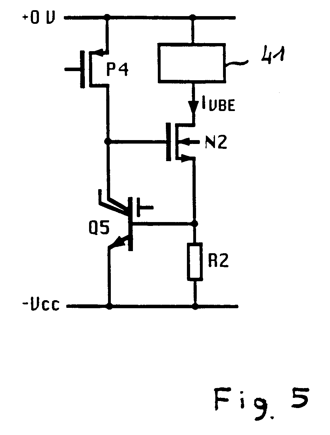

La figure 5 montre le schéma de principe du générateur de courant $IV_{BE}$. Le pMOS P4 agit en source de courant proportionnelle à la température absolue, car sa grille est connectée à celle de P1 (figure 4). La tension $V_{BE}$ du transistor bipolaire compatible Q5 s'ajuste de façon que son courant collecteur soit égal au courant imposé. Pour cela, N2 agit en amplificateur source-suiveur. La conversion tension-courant est réalisée par la résistance R2 et le courant peut être directement utilisé pour alimenter l'oscillateur commandé en courant 41. Le transistor N2 est de préférence placé dans un caisson séparé et le caisson peut être soit connecté à la source de N2, soit connecté à la grille de N2.

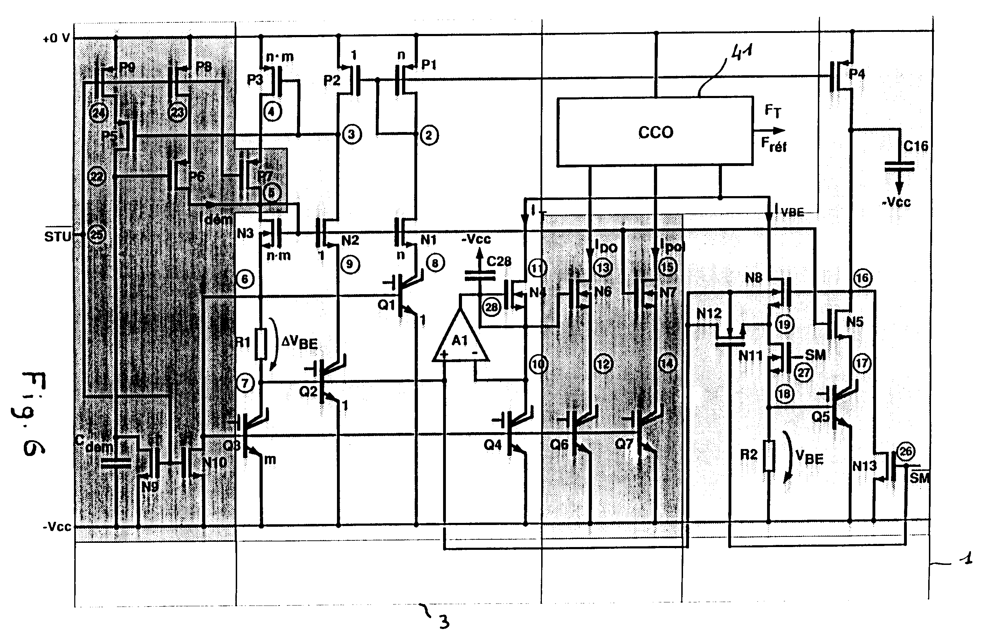

La figure 6 montre le schéma complet des générateurs de courant $I_{VBE}$ et $I_T$. On reconnait le générateur de courant $I_T$, le générateur de courant $I_{VBE}$ et le bloc oscillateur commandé en courant 41. Les transistors P6 et P5 et la capacité $C_{dem}$ constituent le circuit de démarrage qui permet d'assurer un fonctionnement correct du générateur de courant $I_T$. Les transistors P7, P8, P9, N9 et N10 travaillent en interrupteurs. Commandés par la variable STU, ils permettent de mettre le circuit en mode d'arrêt ou de le faire redémarrer. Les transistors N11, N12 et N13 sont également des interrupteurs qui permettent d'annuler le courant $I_{VBE}$ lorsque le bloc 41 doit être contrôlé par le seul courant $I_T$. Le transistor N5 rend la tension collecteur-base de Q5 bien déterminée. Les capacités C16 et C28 sont requises pour remplir les conditions de stabilité des boucles formées par N5-Q5-N8 et A1-N4-Q4. Les sources de courant, formées par les transistors NJ7 et Q7 d'une part, N6 et Q6 d'autre part, servent à polariser l'amplificateur d'asservissement du bloc 41 et à la génération de la tension de consigne $V_{DO}$, respectivement.

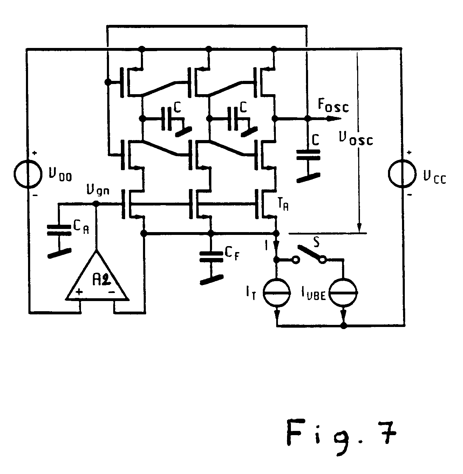

La figure 7 montre le schéma de principe de l'oscillateur commandé en courant 41. Sa réalisation est basée sur la relation: $I_{OSC} = n \cdot F_{OSC} \cdot C \cdot V_{OSC}$, où $I_{OSC}$ est le courant de sortie, n est le nombre d'étages supérieur à 1, $F_{OSC}$ est la fréquence d'oscillation, C est la capacité de chaque noeud et $V_{OSC}$ est l'excursion de tension de chaque noeud, déterminée par la tension d'alimentation des inverseurs. Chaque inverseur est complété par un transistor en série qui permet de faire varier le courant de charge des capacités de chaque noeud en maintenant constante l'excursion de tension. En fait le bloc 41 comprend toujours un nombre d'étages plus grand que les trois représentés sur la figure. Le courant à mesurer est appliqué par les sources de courant $I_T$ et $I_{VBE}$. La tension $V_{OSC}$ est comparée à une tension continue de consigne $V_{DO}$ dans un amplificateur différentiel A2, dont la sortie ajuste les tensions de grille des transistors en série avec chaque noeud de façon que $V_{OSC} = V_{DO}$. la mesure se fait en deux phases. Dans la première phase, l'interrupteur S est ouvert, le courant $I_T$ produit une fréquence $F_T$. Dans la seconde phase, l'interrupteur S est fermé, la somme des courants $I_T$ et $I_{VBE}$ est considérée comme une référence, à laquelle correspond une fréquence $F_{réf}$. Le rapport des fréquences, qui sera mesuré par la partie numérique du circuit, est donné par:

$$F_T/F_{réf} = I_T/(I_T + I_{VBE}).$$

Ce rapport est indépendant des paramètres de l'oscillateur, pourvu qu'ils soient constants d'une phase à l'autre.

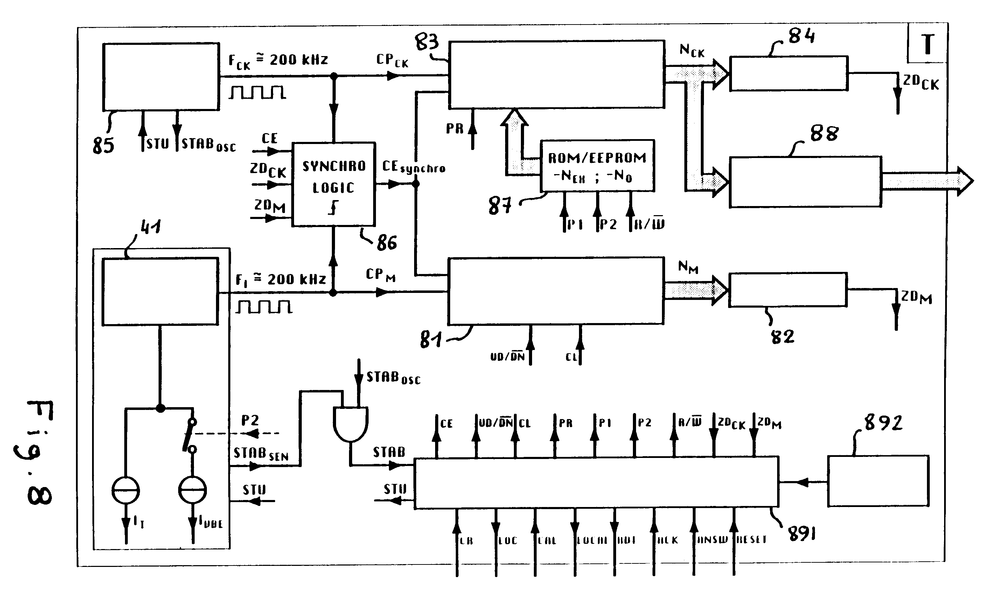

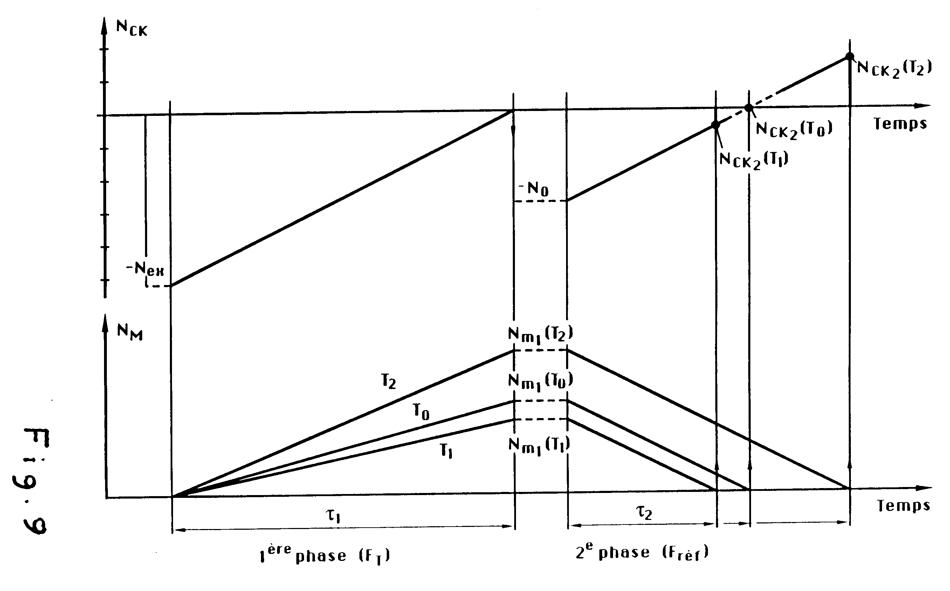

Le fonctionnement du convertisseur va être expliqué en relation avec les figures 8 et 9. Le bloc 41 fournit séquentiellement deux fréquences $F_T$ et $F_{réf}$. Le convertisseur comprend les circuits suivants: un compteur-décompteur 81, un détecteur de zéro 82, un compteur d'horloge à présélection 83, un deuxième détecteur de zéro 84, un oscillateur 85, un circuit logique de synchronisation 86, une mémoire 87, un circuit d'interface 88 et un circuit séquenceur 89. le compteur-décompteur a pour fonction d'intégrer, dans un sens, la fréquence d'entrée $F_T$ puis, dans l'autre sens, la fréquence de référence $F_{réf}$ jusqu'à zéro. Il joue le même rôle que l'intégrateur de tension dans un convertisseur double rampe classique. La variable $N_M$ représente le contenu de ce compteur-décompteur. Le détecteur de zéro 82 délivre un signal $ZD_M$ à la fin de la conversion. Le compteur 83 compte les impulsions fournies par l'oscillateur 85, dont la fréquence de travail $F_{CK}$ est du même ordre de grandeur que la fréquence $F_{réf}$. Le contenu $N_{CK}$ de ce compteur, en fin de conversion, est représentatif de la température selon une loi de correspondance linéaire. Les paramètres de cette loi, à savoir le facteur d'échelle et le zéro de l'échelle de température, sont ajustés en présélectionnant le compteur 83 à une valeur $N_{ex}$ avant la première phase, puis à une valeur $N_0$ avant la deuxième phase. Cette présélection est activée par le signal PR. Le détecteur de zéro 84 délivre un signal $ZD_{CK}$ lorsque $N_{CK}$ devient nul au cours de la première phase. L'oscillateur 85 doit avoir une fréquence stable pendant toute la conversion. Il est réalisé, par exemple, de manière identique à l'oscillateur 41 mais commandé par un seul courant constant. Le circuit 86 synchronise le démarrage et l'arrêt des compteurs 81 et 83. La mémoire 87 mémorise les valeurs $N_{EX}$ et $N_0$ dans seize bits de mémoire EEPROM. Les variables R/W, P1 et P2 commandent, respectivement, la lecture dans la phase de conversion, l'écriture dans la phase de calibration, l'adresse de $N_{ex}$ et l'adresse de $N_0$. Le circuit 88 assure l'adaptation et la transmission du résultat de la conversion. Le circuit séquenceur 89 assure la gestion de tous les signaux de contrôle. Ses modes de fonctionnement sont: un mode d'attente après une remise à zéro ou à la fin d'une conversion ou d'une calibration, un mode de conversion et un mode de calibration. Lors de cette calibration, les valeurs $F_T$ et $F_{réf}$ sont mesurées à deux températures connues et les nombres $N_{ex}$ et $N_0$ qui en découlent sont inscrits dans la mémoire 87. Le séquenceur 89 se compose d'une machine de décision binaire 891, dont la réalisation ne pose pas de problème, et d'un oscillateur à basse fréquence (32 kHz, par exemple) 892.

La conversion comprend essentiellement deux phases d'intégration. Pendant la première phase, de durée fixe, les impulsions du signal $F_T$ sont comptées dans le compteur 81. Pendant la deuxième phase, de durée variable, le contenu du compteur 81 est décrémenté au rythme de la fréquence $F_{réf}$. Cette deuxième phase prend fin lorsque le contenu du compteur est nul. L'évolution des compteurs 81 et 83 est représentée à la figure 9. Les durées $\tau_1$ et $\tau_2$ des première et deuxième phases s'expriment par les relations:

$$\tau_1 = N_{ex} \cdot (1/F_{CK}) = N_{M1}(T) \cdot (1/F_T)$$

où $N_{M1}(T)$ désigne le contenu du compteur 81 et

$$\tau_2 = N_{M1}(T) \cdot (1/F_{réf}) = (N_{CK2}(T) + N_0) \cdot (1/F_{CK})$$

où $N_{CK2}(T)$ représente le contenu du compteur 83, soit la valeur de la température dans l'échelle considérée.

Bien que la présente invention ait été décrite dans le cadre d'exemples de réalisation particuliers, elle n'est pas limitée auxdits exemples et est susceptible de variantes ou modifications qui restent dans le cadre des revendications.

**Revendications**

1. Dispositif de mesure de la température, capable d'être intégré en technologie de type CMOS et comprenant un capteur de température (1), un circuit de référence (3), un convertisseur analogique-numérique (4) et un circuit d'étalonnage (2), caractérisé en ce que le circuit de référence est constitué d'au moins une paire de transistors bipolaires compatibles (Q1 et Q2), traversés par des densités de courant différentes et agencés de manière à engendrer une grandeur égale à la différence de leur tension base-émetteur et un troisième transistor bipolaire compatible (Q5) servant de capteur de température et dont la tension base-émetteur est convertie en un courant ($I_{VBE}$) proportionnel à la température, en ce que ladite grandeur est convertie en un courant de différence ($I_T$) qui est combiné linéairement avec ledit courant proportionnel à la température pour engendrer un courant de référence ($I_{réf}$) indépendant de la température, en ce qu'un oscillateur (81), commandé séquentiellement par les courants $I_T$ et $I_{réf}$, délivre des signaux ($F_T$) et ($F_{réf}$) dont les fréquences sont proportionnelles auxdits courants $I_T$ et $I_{réf}$, respectivement, en ce que ledit convertisseur comprend un compteur-décompteur (81) qui, dans une première phase de durée fixe ($\tau_1$), compte les impulsions du signal $F_T$ et dans une deuxième phase décompte au rythme de la fréquence $F_{réf}$ jusqu'à ce que son contenu soit égal à zéro, la durée de cette deuxième phase étant représentative de la température.

2. Dispositif selon la revendication 1, caractérisé en ce que ledit convertisseur fonctionne selon le principe de la double rampe.

**Claims**

1. Device for measuring temperature, able to be integrated in CMOS type technology and comprising a temperature sensor (1), a reference circuit (3), an analogue to digital converter (4) and a calibration circuit (2), characterised in that the reference circuit consists of at least one pair of compatible bipolar transistors (Q1 and Q2), through which pass different current densities, arranged so as to generate a quantity equal to the difference between their base-emitter voltages, and a third compatible bipolar transistor (Q5) serving as a temperature sensor and whose base-emitter voltage is converted into a current ($I_{VBE}$) proportional to the temperature, in that the said quantity is converted into a difference current ($I_T$) which is linearly combined with the said current proportional to the temperature in order to produce a reference current ($I_{ref}$), independent of the temperature, in that an oscillator (81), controlled in sequence by the currents $I_T$ and $I_{ref}$, delivers signals ($F_T$) and ($F_{ref}$) whose frequencies are proportional to the said currents $I_T$ and $I_{ref}$ respectively, in that the said converter comprises a reversible counter (81) which, in a first phase of fixed duration ($T_1$), counts the pulses of the signal $F_T$ and, in a second phase, deducts at the rate of the frequency $F_{ref}$ until its content is equal to zero, the duration of this second phase representing the temperature.

2. Device according to Claim 1, characterised in that the said converter operates on the double ramp principle.

**Patentansprüche**

1. Temperaturmeßvorrichtung, die in einer Technik vom CMOS-Typ integrierbar ist und einen Temperatursonsor (1), eine Referenzschaltung (3), einen Analog-Digital-Umsetzer (4) und eine Eichschaltung (2) umfaßt, dadurch gekennzeichnet, daß die Referenzschaltung von mindestens einem Paar bipolarer kompatibler Transistoren (Q1 und D2) gebildet wird, durchflossen von unterschiedlichen Stromdichten, und derart angeordnet, daß sie eine Größe erzeugen gleich der Differenz ihrer Basis-Emitter-Spannungen, und von einem dritten kompatiblen Bipolartransistor (Q5), der als Temperatursensor dient und dessen Basis-Emitter-Spannung in einen Strom ($I_{VBE}$) proportional zu der Temperatur umgesetzt wird, daß die genannte Größe in einen Differenzstrom ($I_T$) umgesetzt wird, der linear kombiniert wird mit dem temperaturproportionalen Strom zum Erzeugen eines Referenzstromes ($I_{ref}$), unabhängig von der Temperatur, und daß ein Oszillator (81) sequentiell gesteuert von den Strömen $I_T$ bzw. $I_{ref}$ Signale ($F_T$) bzw. ($F_{ref}$) abgibt, deren Frequenzen proportional den Strömen $I_T$ bzw. $I_{ref}$ sind, daß der Umsetzer einen Aufwärts-Abwärts-Zähler (81) umfaßt, der in einer ersten Phase fester Dauer ($\tau_1$), die Impulse des Signals $F_T$ zählt und in einer zweiten Phase im Rhythmus der Frequenz $R_{ref}$ abwärts zählt, bis sein Zählstand gleich Null ist, wobei die Dauer dieser zweiten Phase repräsentativ für die Temperatur ist.

2. Vorrichtung nach Anspruch 1, dadurch gekennzeichnet, daß der Umsetzer nach dem Prinzip der Doppelrampe arbeitet.

Fig.1

Fig. 2

Fig.3

Fig. 4

Fig. 5

Fig. 6

EP 0 406 174 B1

Fig. 7

Fig.8

Fig. 9